# EUROPÄISCHE PATENTSCHRIFT

(11) **EP 3 193 092 B1**
(45) Veröffentlichungstag und Bekanntmachung des Hinweises auf die Patenterteilung: **22.07.2020**
(21) Anmeldenummer: 16207388.6
(22) Anmeldetag: 29.12.2016
(51) Int. Cl.: F24F 5/00, F28F 1/12, F28D 20/00, F28F 1/42, F28F 1/20

(54) **ANLAGE MIT ZULUFTLEITUNG ZUM ERWÄRMEN ODER KÜHLEN VON ZULUFT**
INSTALLATION WITH SUPPLY AIR INTAKE FOR HEATING OR COOLING SUPPLY AIR
INSTALLATION COMPRENANT UNE CONDUITE D'ADMISSION D'AIR SERVANT À CHAUFFER OU À REFROIDIR L'AIR ADMIS

(30) Priorität: 14.01.2016 DE 102016100600
(43) Veröffentlichungstag der Anmeldung: 19.07.2017
(73) Patentinhaber: Obermeier, Josef, 87648 Aitrang (DE)
(72) Erfinder: Obermeier, Josef, 87648 Aitrang (DE)
(74) Vertreter: Horn Kleimann Waitzhofer Patentanwälte PartG mbB

(56) Entgegenhaltungen:
- EP-A1- 1 596 139
- EP-A1- 2 284 449
- WO-A2-2013/010068
- DE-A1-102007 042 255
- JP-A- S59 208 336
- JP-U- S5 869 719

## Beschreibung

Die vorliegende Erfindung betrifft eine Anlage mit einer Zuluftleitung und ein Verfahren zum Betreiben einer Zuluftleitung. Luftwärmepumpen entziehen der Zuluft Wärme und heben diese mittels einer Wärmepumpe auf ein verwertbares höheres Temperaturniveau an, um damit Gebäude oder andere Einrichtungen beheizen zu können. Bei Luftwärmepumpen kann bei niedrigen Außenlufttemperaturen eine Zusatzheizung, z.B. ein Elektroheizstab, vorgesehen werden. Durch die Vorwärmung der Zuluft kann eine deutliche Wirkungsgradverbesserung der Luftwärmepumpe, d.h. eine Verbesserung der Leistungszahl, und damit der Luftwärmepumpenheizleistung erreicht werden.

Eine Vorwärmung von Zuluft kann auch mittels Erdwärme erreicht werden. Die DE 20 2008 016 850 U1 beschreibt eine Zuluftleitung, welche von einer Halbschale umgeben ist, wobei die Halbschale mit feuchtgehaltenen Füllstoffen versehen ist, um die Wärmeübertragung vom Erdreich zur Zuluftleitung zu verbessern.

Weiter werden Zuluftleitungen auch verwendet, um die Raumluft von Gebäuden vorzukühlen, insbesondere im Sommer, oder vorzuheizen, insbesondere im Winter. Die JP-S58 69719U offenbart eine Anlage mit einer Zuluftleitung, die ein Rohr und mehreren wärmeleitende Elemente, die als Wärmerohre ausgebildet sind, und die die Rohrwand des Rohrs durchstossen, wobei die Zuluftleitung durch das Erdreich verläuft.

Vor diesem Hintergrund besteht eine Aufgabe der vorliegenden Erfindung darin, eine Zuluftleitung bereitzustellen, bei der die Wärme- oder Kälteübertragung von dem Erdreich zu der Zuluft verbessert wird. Es ist eine weitere Aufgabe eine verbesserte Luftwärmepumpe, eine verbesserte Anlage sowie ein verbessertes Verfahren zum Betreiben einer Zuluftleitung bereitzustellen.

Demgemäß wird eine Zuluftleitung zum Erwärmen oder Kühlen von Zuluft bereitgestellt, aufweisend ein Rohr mit einer Rohrmittelachse und einer Rohrwand, welche einen Rohrinnenbereich von einem Rohraußenbereich trennt, und mehrere wärmeleitende Elemente, wobei die wärmeleitenden Elemente die Rohrwand durchstoßen, um Wärme zwischen dem Rohraußenbereich und dem Rohrinnenbereich zu leiten.

Dadurch, dass die wärmeleitenden Elemente die Rohrwand durchstoßen, können die wärmeleitenden Elemente Wärme und/oder Kälte zwischen einem Rohrau-ßenbereich und einem Rohrinnenbereich leiten. Deswegen kann das Rohr aus einem Material bestehen, welches kein guter Wärmeleiter ist, wie beispielsweise Kunststoff. Somit kann das Rohr aus einem billigen Material hergestellt werden. Die wärmeleitenden Elemente können ein oder mehrere Metalle aufweisen.

Insbesondere kann die Zuluftleitung unterhalb der Erdoberfläche verlegt werden und dem Erdreich mittels der wärmeleitenden Elemente Wärme entziehen. Die Wärme kann dann über die wärmeleitenden Elemente in den Rohrinnenbereich geleitet werden. Im Rohrinnenbereich kann die Wärme dann von den wärmeleitenden Elementen an die Zuluft abgegeben werden, welche durch den Rohrinnenbereich strömt. Somit kann die Zuluft, welche durch die Zuluftleitung strömt, erwärmt werden. Die Zuluftleitung zum Erwärmen der Zuluft kann beispielsweise bei einer Luftwärmepumpe eingesetzt werden.

Die Zuluftleitung kann aber auch zum Erwärmen oder Kühlen von Raumluft für ein Gebäude vorgesehen werden. Dabei kann die Zuluft mittels der Zuluftleitung im Winter erwärmt und im Sommer gekühlt werden.

Aufgrund der wärmeleitenden Elemente kann die Länge der Zuluftleitung kurz sein und trotzdem noch eine ausreichende Erwärmung oder Kühlung der Zuluft bewirken. Insbesondere kann die Länge der Zuluftleitung zwischen 2 m und 12 m, 2m und 8 m oder 2m und 4 m betragen. Bei diesen kurzen Längen der Zuluftleitung ist der Druckverlust in der Zuluftleitung sehr gering. Dadurch kann ein Ventilator, beispielsweise einer Luftwärmepumpe, alleine für den benötigten Luftvolumenstrom sorgen. Zusätzliche Ventilatoren sind nicht erforderlich. Dadurch kann auch der Grabungsaufwand gering gehalten werden.

Aufgrund der wärmeleitenden Elemente kann nicht nur dem unmittelbar am Rohr der Zuluftleitung anliegenden Erdreich Wärme entzogen werden oder Wärme an dieses abgegeben werden, sondern über die wärmeleitenden Elemente wird auch Erdreich, welches weiter vom Rohr entfernt ist, mit einbezogen. Auf diese Weise wird der Wärmeaustausch mit dem Erdreich verbessert, da ein größerer Bereich des Erdreichs mit für den Wärmeaustausch mit einbezogen wird.

Das Rohr der Zuluftleitung kann prinzipiell eine beliebige Form aufweisen. Insbesondere kann der Querschnitt des Rohrs kreisförmig oder oval sein. Weiter kann das Rohr auch als biegbarer Schlauch ausgebildet sein.

Die wärmeleitenden Elemente durchstoßen die Rohrwand. Dies kann insbesondere bedeuten, dass in der Rohrwand für jedes wärmeleitende Element eine Durchführung vorgesehen ist, durch welche das wärmeleitende Element ragen kann.

Gemäß einer Ausführungsform der Zuluftleitung durchstoßen die wärmeleitenden Elemente die Rohrwand in radialer Richtung bezogen auf die Rohrmittelachse. Vorteilhafterweise können die wärmeleitenden Elemente dann einfach mit dem Rohr zusammengebaut werden.

Gemäß einer weiteren Ausführungsform der Zuluftleitung entspricht eine Eintauchtiefe zumindest eines wärmeleitenden Elements in den Rohrinnenbereich, von einer Mitte der Rohrwand aus gemessen, zwischen 1/3 und 1/5, insbesondere 1/4, einer Gesamthöhe des zumindest einen wärmeleitenden Elements in radialer Richtung bezogen auf die Rohrmittelachse. Die Gesamthöhe wird in der radialen Richtung gemessen. Die Rohrwand weist eine Dicke auf. Da die Eintauchtiefe von der Mitte der Rohrwand aus gemessen wird, gehört die Hälfte der Rohrdicke mit zur Eintauchtiefe. Vorteilhafterweise wird ein besserer Wärmetransport zwischen dem Rohrinnenbereich und dem Rohraußenbereich erreicht, wenn der höhere Teil, d.h. der in der radialen Richtung längere Teil, des wärmeleitenden Elements in dem Rohraußenbereich liegt.

Gemäß einer weiteren Ausführungsform der Zuluftleitung entspricht eine Oberfläche zumindest eines wärmeleitenden Elements in dem Rohrinnenbereich, von einer Mitte der Rohrwand aus gemessen, zwischen 1/3 und 1/5, insbesondere 1/4, einer Gesamtoberfläche des zumindest einen wärmeleitenden Elements. Vorteilhafterweise wird ein besserer Wärmetransport zwischen dem Rohrinnenbereich und dem Rohraußenbereich erreicht, wenn der größere Teil der Gesamtoberfläche des wärmeleitenden Elements in dem Rohraußenbereich liegt.

Gemäß einer weiteren Ausführungsform der Zuluftleitung ragt zumindest ein wärmeleitendes Element durch einen Schlitz in der Rohrwand hindurch, welcher parallel zu der Rohrmittelachse verläuft. Dadurch, dass der Schlitz parallel zu der Rohrmittelachse verläuft, verläuft auch ein durch den Schlitz ragendes wärmeleitendes Element parallel zu der Rohrmittelachse. Durch diese Ausrichtung des wärmeleitenden Elements parallel zu der Rohrmittelachse kann der Luftwiderstand in dem Rohrinnenbereich gering gehalten werden. Damit ist es ausreichend Ventilatoren mit geringer Leistung zum Betreiben der Zuluftleitung zu verwenden.

Gemäß einer weiteren Ausführungsform der Zuluftleitung weist zumindest ein wärmeleitendes Element eine stabförmige Form auf und ist in radialer Richtung bezogen auf die Rohrmittelachse angeordnet. Vorteilhafterweise kann das wärmeleitende Element aufgrund seiner stabförmigen Form besonders einfach mit dem Rohr zusammengebaut werden. Beispielsweise kann das Rohr zumindest ein Loch mit einem Gewinde und das zumindest eine wärmeleitende Element ein passendes Gegengewinde zum Verschrauben mit dem Gewinde des zumindest einen Lochs aufweisen.

Gemäß einer weiteren Ausführungsform der Zuluftleitung verringert sich bei zumindest einem wärmeleitenden Element eine Länge desselben entlang der Rohrmittelachse in radialer Richtung. Dadurch kann das wärmeleitende Element eine in Richtung der Rohrmittelachse spitz zulaufende Form aufweisen. Vorteilhafterweise kann mit einer solchen Form einfach gewährleistet sein, dass ein größerer Teil der Gesamtoberfläche des wärmeleitenden Elements in dem Rohraußenbereich liegt.

Gemäß einer weiteren Ausführungsform der Zuluftleitung weist zumindest ein wärmeleitendes Element eine Platte auf. Dabei kann die Platte als dünnes Blech ausgebildet sein. Vorteilhafterweise kann die Platte derart angeordnet sein, dass die Platte den Luftwiderstand in dem Rohrinnenbereich des Rohrs der Zuluftleitung überhaupt nicht oder nur geringfügig beeinflusst.

Gemäß einer weiteren Ausführungsform der Zuluftleitung weist zumindest ein wärmeleitendes Element zumindest ein Verbindungselement und mehrere Schrauben und/oder Niete auf und das Verbindungselement ist mittels der Schrauben und/oder Niete derart mit der Rohrwand verbunden, dass die Schrauben und/oder Niete durch die Rohrwand hindurch in den Rohrinnenbereich ragen. Vorteilhafterweise können Standardschrauben oder Standardnieten verwendet werden, da diese ohnehin ein Metall aufweisen und daher die Wärme gut leiten können. Weiter kann das Rohr aus Kunststoff hergestellt sein, so dass die Standardschrauben einfach durch das Kunststoffrohr geschraubt werden können.

Gemäß einer weiteren Ausführungsform der Zuluftleitung ist das Rohr aus zumindest zwei Rohrschalen gebildet und zumindest ein wärmeleitendes Element ist zwischen den zumindest zwei Rohrschalen befestigt. Vorteilhafterweise kann dann ein besonders großflächiges wärmeleitendes Element verwendet werden.

Gemäß einer weiteren Ausführungsform der Zuluftleitung sind mehrere wärmeleitende Elemente symmetrisch in Bezug auf die Rohrmittelachse angeordnet.

Vorteilhafterweise durchdringen die wärmeleitenden Elemente das Erdreich in dem Rohraußenbereich dann in dem maximal möglichen Abstand zueinander. Auf diese Weise kann die Wärme bestmöglich mit dem Erdreich ausgetauscht werden, weil sich die wärmeleitenden Elemente in dem Rohraußenbereich nicht gegenseitig beeinflussen.

Gemäß einer weiteren Ausführungsform der Zuluftleitung weist das Rohr zumindest zwei Rohrteile auf und zumindest ein wärmeleitendes Element weist eine Zuluftdurchführung auf, welche zwischen den zumindest zwei Rohrteilen angeordnet ist, wobei einzelne Zacken des wärmeleitenden Elements von einem Rand der Zuluftdurchführung hervorstehen. Vorteilhafterweise brauchen die einzelnen Rohrteile dann nicht weiter bearbeitet zu werden. Das Fertigen von Löchern, Bohrungen und/oder Schlitzen in den Rohrteilen entfällt somit.

Weiter wird eine Luftwärmepumpe mit einer Zuluftleitung, wie beschrieben, bereitgestellt. Vorteilhafterweise kann die Zuluftleitung zum Erwärmen der Zuluft der Luftwärmepumpe eingesetzt werden. Damit lässt sich, insbesondere in den Wintermonaten, die Leistungskennzahl der Luftwärmepumpe verbessern.

Weiter wird eine Anlage bereitgestellt, aufweisend ein Gebäude und Erdreich, welches um das Gebäude angeordnet ist. Die Anlage weist ferner eine Zuluftleitung, wie beschrieben, oder eine Luftwärmepumpe, wie beschrieben, auf. Dabei verläuft die Zuluftleitung durch das Erdreich. Insbesondere verläuft die Zuluftleitung über eine Länge von mindestens 2 m in einer Tiefe in dem Erdreich von 2 - 5 m, 2 - 7 m oder 2 - 10 m von der Erdoberfläche aus gemessen.

Weiter wird ein Verfahren zum Betreiben einer Zuluftleitung beschrieben, mit den Schritten: A) Erwärmen oder Kühlen eines wärmeleitenden Elements in einem Rohraußenbereich, B) Leiten einer aufgenommenen Wärme oder Kälte mittels des wärmeleitenden Elements, welches eine Rohrwand eines Rohrs der Zuluftleitung durchstößt, von dem Rohraußenbereich in einen Rohrinnenbereich, und C) Abgeben der Wärme oder Kälte des wärmeleitenden Elements an Zuluft, welche den Rohrinnenbereich durchströmt.

Dadurch, dass das wärmeleitende Element die Rohrwand eines Rohrs der Zuluftleitung durchstößt, kann Wärme zwischen dem Erdreich und der Zuluft effektiv ausgetauscht werden.

Die für die vorgeschlagene Zuluftleitung beschriebenen Ausführungsformen und Merkmale gelten für die vorgeschlagene Luftwärmepumpe, die vorgeschlagene Anlage und das vorgeschlagene Verfahren entsprechend und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine Anlage gemäß einem Ausführungsbeispiel;
Fig. 2A zeigt eine Zuluftleitung gemäß einem Ausführungsbeispiel;
Fig. 2B zeigt eine Schnittansicht der Zuluftleitung aus Fig. 2A;
Fig. 3A zeigt eine Zuluftleitung gemäß einem weiteren Ausführungsbeispiel;
Fig. 3B zeigt eine Schnittansicht der Zuluftleitung aus Fig. 3A;
Fig. 4A zeigt eine Zuluftleitung gemäß einem weiteren Ausführungsbeispiel;
Fig. 4B zeigt eine Schnittansicht der Zuluftleitung aus Fig. 4A;
Fig. 5A zeigt eine Zuluftleitung gemäß einem weiteren Ausführungsbeispiel;
Fig. 5B zeigt eine Schnittansicht der Zuluftleitung aus Fig. 5A;
Fig. 6A zeigt eine Zuluftleitung gemäß einem weiteren Ausführungsbeispiel;
Fig. 6B zeigt eine Schnittansicht der Zuluftleitung aus Fig. 6A;
Fig. 7A zeigt eine Zuluftleitung gemäß einem weiteren Ausführungsbeispiel;
Fig. 7B zeigt eine Schnittansicht der Zuluftleitung aus Fig. 7A;
Fig. 8A zeigt eine Zuluftleitung gemäß einem weiteren Ausführungsbeispiel;
Fig. 8B zeigt eine Schnittansicht der Zuluftleitung aus Fig. 8A; und
Fig. 9 zeigt ein Ablaufdiagramm eines Verfahrens zum Betreiben einer Zuluftleitung.

In den Figuren sind gleiche oder funktionsgleiche Elemente mit denselben Bezugszeichen versehen worden, sofern nichts anderes angegeben ist.

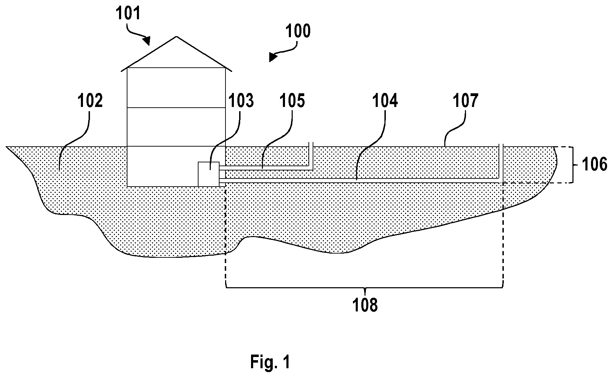

Fig. 1 zeigt eine Anlage 100 gemäß einem Ausführungsbeispiel. Die Anlage 100 weist ein Gebäude 101, Erdreich 102 und eine Luftwärmepumpe 103 mit einer Zuluftleitung 104 auf. Das Erdreich 102 ist um das Gebäude 101 herum angeordnet. Die Zuluft für die Luftwärmepumpe 103 wird über die Zuluftleitung 104 angesaugt und über eine Abluftleitung 105 wieder abgegeben. Dabei wird die Zuluft mittels der Zuluftleitung 104 vorgewärmt. Dazu wird dem Erdreich Wärme entzogen und an die Zuluft abgegeben. Durch die Vorwärmung der Zuluft kann die Effizienz, angegeben in der Leistungszahl, der Luftwärmepumpe 103 erhöht werden.

Die Zuluftleitung 104 wird in einer Tiefe 106 verlegt, wobei die Tiefe 106 von der Erdoberfläche 107 aus gemessen wird. Genauer kann die Zuluftleitung 104 über eine Länge 108 von mindestens 2 m in einer Tiefe 106 von 2 - 5 m, 2 - 7 m oder 2 - 10 m verlegt sein. Die Länge 108 kann im Bereich von 2 - 5 m, 2 - 10 m oder 2 - 15 m liegen. Beispielsweise schwankt in Deutschland die Außentemperatur über das Jahr gesehen stark von ca. -20 °C bis ca. +35 °C. Bis zu einer Tiefe 106 von ca. 3 m sind die Temperaturschwankungen über das Jahr noch ausgeprägt. In einer Tiefe 106 von ca. 5 m beträgt die Temperatur dagegen über das gesamte Jahr hinweg annähernd 10 °C. Vor allem im Winter kann die Zuluft mit der im Erdreich 102 verlegten Zuluftleitung 104 erwärmt werden.

Mittels der Zuluftleitung 104 kann die Zuluft zwischen 2°C und 3°C, zwischen 2°C und 5°C, zwischen 2°C und 10°C oder zwischen 2°C und 15°C erwärmt werden. Dabei ist die Erwärmung der Zuluft abhängig von der Gesamtlänge, mit der die Zuluftleitung 104 unterhalb der Erdoberfläche 107 verlegt ist, von der Temperatur des Erdreichs 102 und der genauen Ausgestaltung der Zuluftleitung 104.

Die Zuluftleitung 104 kann auch ohne Luftwärmepumpe 103 eingesetzt werden. Beispielsweise kann die Versorgung mit Raumluft für ein Gebäude 101 über eine Zuluftleitung 104 erfolgen. Die Zuluftleitung 104 kühlt die Zuluft dann bei hohen Außentemperaturen und erwärmt die Zuluft bei niedrigen Außentemperaturen.

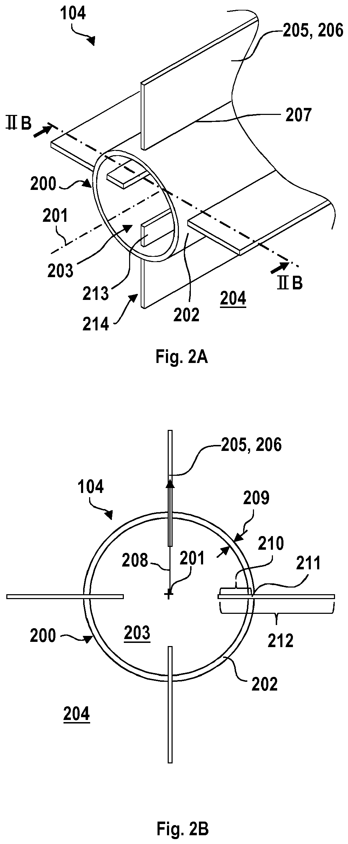

Fig. 2A zeigt eine Zuluftleitung 104 gemäß eines Ausführungsbeispiels, wie sie beispielsweise in der Anlage 100 eingesetzt werden kann. Die Zuluftleitung 104 weist ein Rohr 200 mit einer Rohrmittelachse 201 und einer Rohrwand 202 auf. Dabei trennt die Rohrwand 202 einen Rohrinnenbereich 203 von einem Rohraußenbereich 204. Weiter umfasst die Zuluftleitung 104 mehrere wärmeleitende Elemente 205. Die wärmeleitenden Elemente 205 durchstoßen die Rohrwand 202. Somit ragen die wärmeleitenden Elemente 205 von dem Rohraußenbereich 204 in den Rohrinnenbereich 203. Mittels der wärmeleitenden Elemente 205 kann Wärme zwischen dem Erdreich 102 im Rohraußenbereich und der Zuluft, welche durch den Rohrinnenbereich 203 strömt, ausgetauscht werden.

Das Rohr 200 kann Kunststoff, Beton und/oder Stahl aufweisen oder daraus bestehen. Die Wärmeleitfähigkeit von Kunststoff beträgt ca. 0,17 W/(m*K) (Watt pro Meter mal Kelvin), die Wärmeleitfähigkeit von Beton beträgt ca. 2,1 W/(m*K) und die Wärmeleitfähigkeit von Stahl beträgt ca. 55 W/(m*K). Dagegen können die wärmeleitenden Elemente 205 Stahl, Aluminium und/oder Kupfer aufweisen oder daraus bestehen. Weiter beträgt die Wärmeleitfähigkeit von Aluminium ca. 230 W/(m*K) und die von Kupfer ca. 350 W/(m*K). Demnach ist die Wärmeleitfähigkeit von Aluminium ca. 4,2 mal höher als die Wärmeleitfähigkeit von Stahl, ca. 110 mal höher als die Wärmeleitfähigkeit von Beton und ca. 1350 mal höher als die Wärmeleitfähigkeit von Kunststoff.

Dementsprechend können die wärmeleitenden Elemente 205 aufgrund der höheren Wärmeleitfähigkeit gegenüber dem Rohr 200 maßgeblich zur Übertragung von Wärme zwischen dem Rohraußenbereich 204 und dem Rohrinnenbereich 203 beitragen. Aber selbst in dem Fall in dem sowohl das Rohr 200 als auch die wärmeleitenden Elemente 205 das gleiche Material, wie beispielsweise Stahl, aufweisen, können die wärmeleitenden Elemente 205 aufgrund der für die Wärmeübertragung zur Verfügung stehenden Oberfläche zur Übertragung von Wärme beitragen. In einer Alternative weisen die einzelnen wärmeleitenden Elemente 205 unterschiedliche Materialien auf.

Die Form der wärmeleitenden Elemente 205 ist prinzipiell beliebig. Insbesondere können die wärmeleitenden Elemente 205 eine Platte 206, z.B. ein Blech, aufweisen. Die Form der Platte 206 hat eine große Oberfläche, was für die Wärmeübertragung von Vorteil ist.

Wie in der Fig. 2A zu sehen, weist das Rohr 200 mehrere Schlitze 207 in der Rohrwand 202 auf. Dabei verlaufen die Schlitze 207 parallel zu der Rohrmittelachse 201. Die wärmeleitenden Elemente 205 ragen durch die Schlitze 207 von dem Rohraußenbereich 204 in den Rohrinnenbereich 203.
Fig. 2B zeigt eine Schnittansicht der Zuluftleitung 104 aus Fig. 2A. Wie in der Fig. 2B dargestellt, können die wärmeleitenden Elemente 205 die Rohrwand 202 in radialer Richtung 208 durchstoßen. Die radiale Richtung 208 bezieht sich dabei auf die Rohrmittelachse 201.

Die wärmeleitenden Elemente 205 sind zum Teil im Rohrinnenbereich 203 und zum Teil im Rohraußenbereich 204 angeordnet. Die Rohrwand 202 weist eine Dicke 209 auf. Die Eintauchtiefe 210, d.h. die Höhe mit der ein wärmeleitendes Element 205 in den Rohrinnenbereich 203 ragt, wird von der Mitte 211 der Rohrwand 202 aus gemessen. Dabei kann die Eintauchtiefe 210 zwischen 1/3 und 1/5, insbesondere 1/4, der Gesamthöhe 212 betragen, wobei die Eintauchtiefe 210 und die Gesamthöhe 212 in radialer Richtung 208 bezogen auf die Rohrmittelachse 201 gemessen werden.

Alternativ oder zusätzlich kann, wie in Fig. 2A zu sehen, die Oberfläche 213 eines wärmeleitenden Elements 205 in dem Rohrinnenbereich 203 zwischen 1/3 und 1/5, insbesondere 1/4 , der Gesamtoberfläche 214 des wärmeleitenden Elements 205 betragen. Dabei wird die Oberfläche 213 von der Mitte 211 der Rohrwand 202 aus gemessen. Dadurch, dass sich der größere Teil der Gesamtoberfläche 214 in Kontakt mit dem Erdreich 102 befindet, kann die Wärme gut zwischen dem Erdreich 102 und dem wärmeleitendem Element 205 ausgetauscht werden.

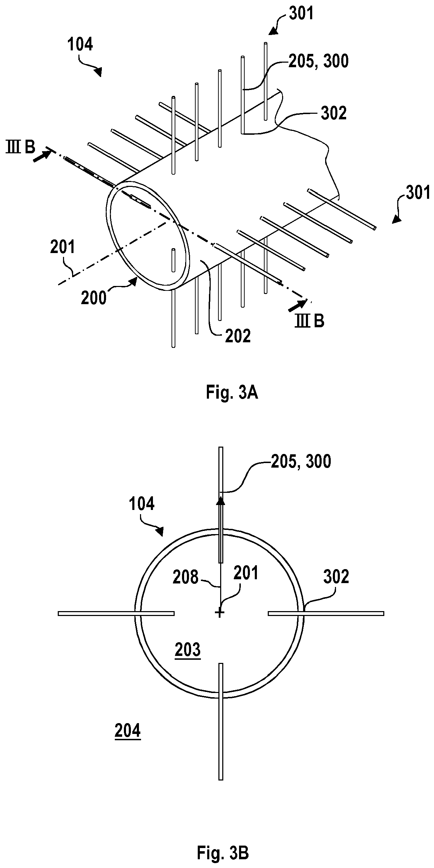

Fig. 3A zeigt eine Zuluftleitung 104 gemäß einem weiteren Ausführungsbeispiel. Weiter zeigt Fig. 3B eine Schnittansicht der Zuluftleitung 104 aus Fig. 3A. Im Unterschied zu dem Ausführungsbeispiel aus Fig. 2A und 2B weisen die wärmeleitenden Elemente 205 eine stabförmige Form 300 auf. Weiter sind die wärmeleitenden Elemente 205 auch hier in radialer Richtung 208 bezogen auf die Rohrmittelachse 201 angeordnet.

Die wärmeleitenden Elemente 205 können in einzelnen Reihen 301 angeordnet sein. Alternativ können die wärmeleitenden Elemente 205 auch beliebig über das Rohr 200 verteilt sein.

Die wärmeleitenden Elemente 205 durchstoßen die Rohrwand 202. Dabei können die wärmeleitenden Elemente 205 Gewinde aufweisen, wobei die Rohrwand Löcher 302 mit entsprechenden Gegengewinden aufweisen kann. In diesem Fall können die wärmeleitenden Elemente 205 mit der Rohrwand 202 verschraubt werden.

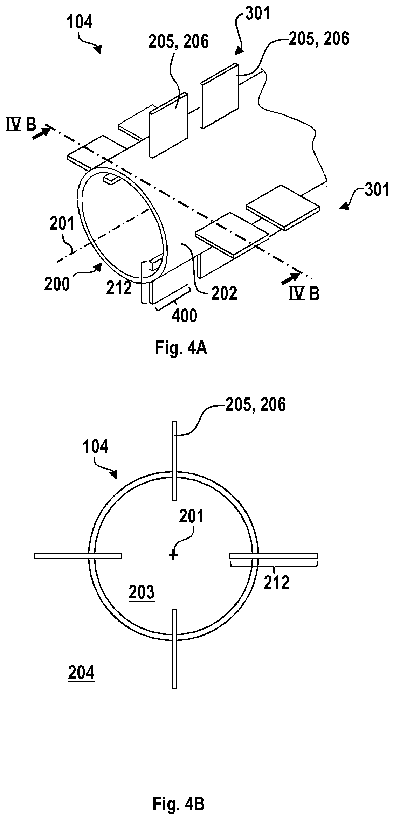

Fig. 4A zeigt eine Zuluftleitung 104 gemäß einem weiteren Ausführungsbeispiel. Weiter zeigt Fig. 4B eine Schnittansicht der Zuluftleitung 104 aus Fig. 4A. Im Unterschied zu dem Ausführungsbeispiel aus Fig. 2A und 2B sind mehrere wärmeleitende Elemente 205 in mehreren Reihen 301 angeordnet. Alternativ kann die Anordnung der wärmeleitenden Elemente 205 auch von der Reihenformation abweichen. Weiter kann die Länge 400 der wärmeleitenden Elemente 205 kleiner als die Gesamthöhe 212 der wärmeleitenden Elemente 205 sein.

Die wärmeleitenden Elemente 205 können symmetrisch bezogen auf die Rohrmittelachse 201 angeordnet sein. Alternativ können die wärmeleitenden Elemente 205 auch unsymmetrisch in Bezug auf die Rohrmittelachse 201 angeordnet sein.

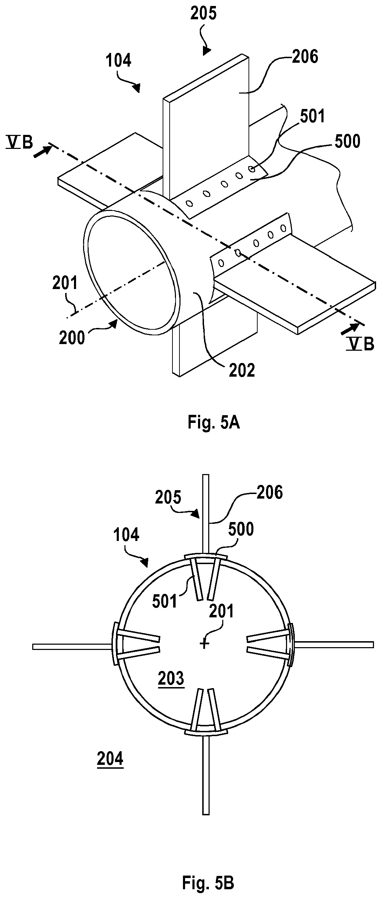

Fig. 5A zeigt eine Zuluftleitung 104 gemäß einem weiteren Ausführungsbeispiel. Weiter zeigt Fig. 5B eine Schnittansicht der Zuluftleitung 104 aus Fig. 5A. Die gezeigten wärmeleitenden Elemente 205 weisen eine Platte 206, z.B. ein Blech, ein Verbindungselement 500 und mehrere Schrauben 501 auf. Das Verbindungselement 500 ist fest mit der Platte 206 verbunden. Beispielsweise sind das Verbindungselement 500 und die Platte 206 miteinander verschweißt. Weiter ist das Verbindungselement 500 mittels der Schrauben 501 derart mit der Rohrwand 202 verbunden, dass die Schrauben 501 durch die Rohrwand 202 hindurch in den Rohrinnenbereich 203 ragen. Dabei sind die Platte 206, das Verbindungselement 500 und die Schrauben 501 derart miteinander Verbunden oder in Kontakt, dass die Wärme gut zwischen dem Rohrinnenbereich 203 und dem Rohraußenbereich 204 geleitet werden kann.

Alternativ können anstatt der Schrauben 501 auch Niete verwendet werden. In einer weiteren Alternative kann das Verbindungselement 500 auch als zwei Winkelelemente ausgebildet sein, um die Platte 206 an der Rohrwand 202 zu befestigen. Alternativ können die Platte 206 und das Verbindungselement 500 auch einstückig ausgebildet sein.

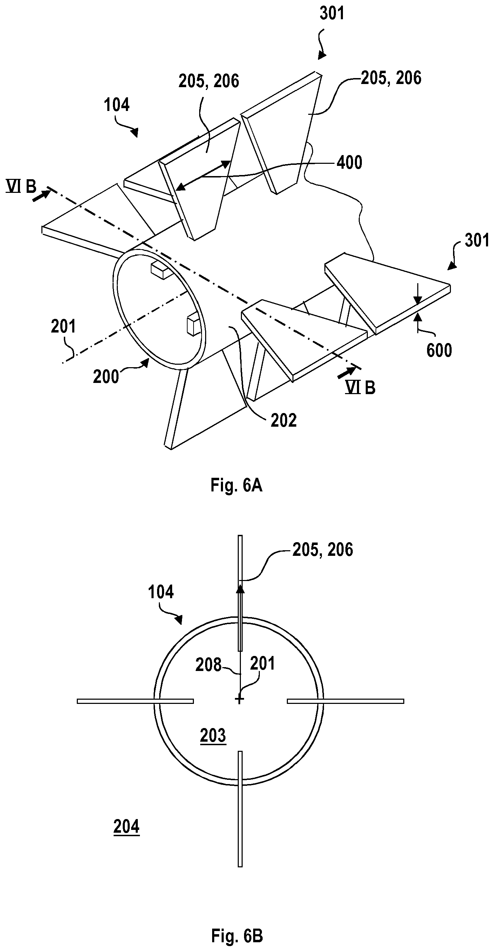

Fig. 6A zeigt eine Zuluftleitung 104 gemäß einem weiteren Ausführungsbeispiel. Weiter zeigt Fig. 6B eine Schnittansicht der Zuluftleitung 104 aus Fig. 6A. Der Unterschied zu dem Ausführungsbeispiel aus Fig. 4A und 4B ist der, dass die wärmeleitenden Elemente 205 eine andere Form aufweisen. Wie in Fig. 6A zu sehen, verringert sich die Länge 400 der wärmeleitenden Elemente 205 in radialer Richtung 208 bezogen auf die Rohrmittelachse 201.

Alternativ oder zusätzlich könnte auch eine Breite 600 der wärmeleitenden Elemente 205 in radialer Richtung 208 bezogen auf die Rohrmittelachse 201 verringert werden.

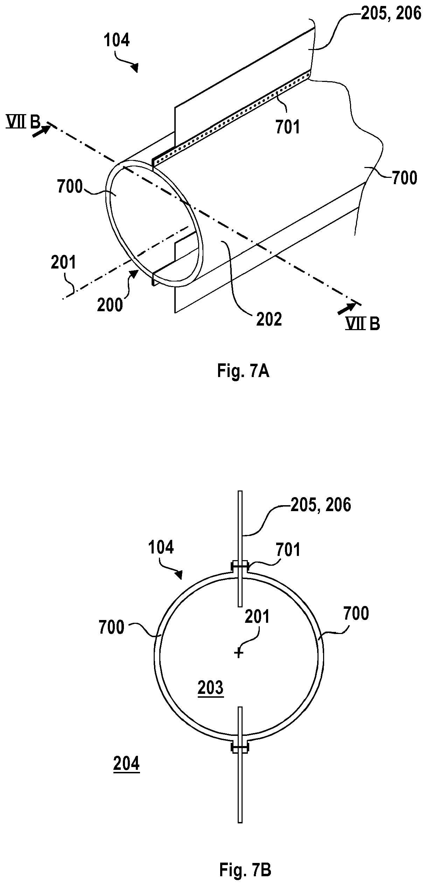

Fig. 7A zeigt eine Zuluftleitung 104 gemäß einem weiteren Ausführungsbeispiel. Weiter zeigt Fig. 7B eine Schnittansicht der Zuluftleitung 104 aus Fig. 7A. Wie in den Fig. 7A und 7B zu sehen ist, kann das Rohr 200 aus zwei Rohrschalen 700 gebildet werden. Zwischen den beiden Rohrschalen 700 werden zwei wärmeleitende Elemente 205 befestigt.

Die beiden Rohrschalen 700 können über Schrauben 701 miteinander befestigt werden. Alternativ können für die Befestigung der Rohrschalen 700 miteinander auch Niete verwendet werden. Wie in Fig. 7B dargestellt, können die Schrauben 701 und/oder Niete ein wärmeleitendes Element 205 durchdringen.

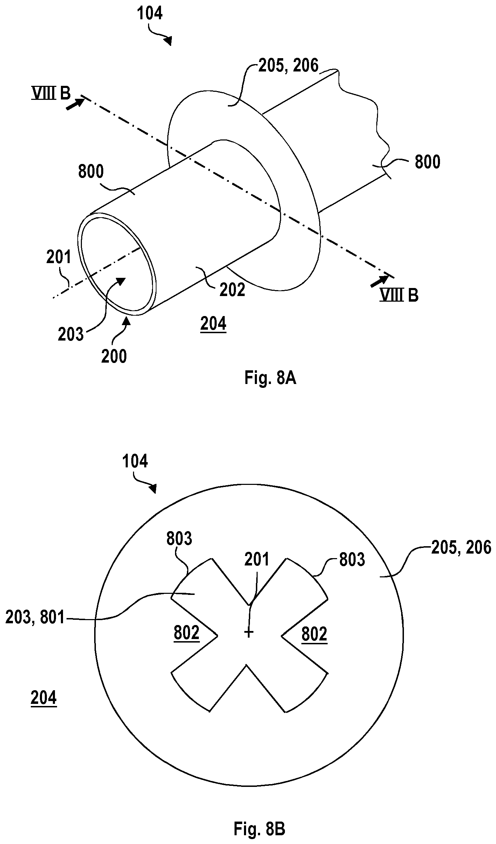

Fig. 8A zeigt eine Zuluftleitung 104 gemäß einem weiteren Ausführungsbeispiel. Weiter zeigt Fig. 8B eine Schnittansicht der Zuluftleitung 104 aus Fig. 8A. Das Rohr 200 kann zwei Rohrteile 800 aufweisen, welche hintereinander angeordnet werden können. Zwischen den beiden Rohrteilen 800 kann ein wärmeleitendes Element 205 angeordnet werden. Das wärmeleitende Element 205 weist eine Zuluftdurchführung 801 auf. Dabei wird das wärmeleitende Element 205 derart zwischen den beiden Rohrteilen 800 angeordnet, dass die Zuluftdurchführung 801 vollständig in dem Rohrinnenbereich 203 des Rohrs 200 liegt. Die Rohrteile 800 können beide an dem wärmeleitenden Element 205 befestigt werden. Weiter kann das wärmeleitende Element 205 Zacken 802 aufweisen, welche von einem Rand 803 der Zuluftdurchführung 801 hervorstehen.

Die Zuluftleitung 104 ist in den Fig. 2 bis 8 mit unterschiedlichen wärmeleitenden Elementen 205 gezeigt. Die Zuluftleitung 104 kann auch eine Kombination von mehreren der gezeigten wärmeleitenden Elemente 205 aufweisen.

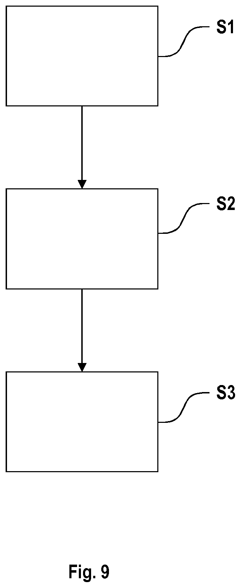

Fig. 9 zeigt ein Ablaufdiagramm eines Verfahrens zum Betreiben einer Zuluftleitung 104. In einem ersten Schritt S1 wird ein wärmeleitendes Element 205 in einem Rohraußenbereich 204 erwärmt. Dazu wird, wie Fig. 1 zeigt, die Zuluftleitung 104 im Erdreich 102 angeordnet.

In einem zweiten Schritt S2 wird die aufgenommene Wärme mittels des wärmeleitenden Elements 205, welches die Rohrwand 202 des Rohrs 200 der Zuluftleitung 104 durchstößt, von dem Rohraußenbereich 204 in den Rohrinnenbereich 203 geleitet. Dafür kann das wärmeleitende Element 205 wie in den Fig. 2 bis 8 ausgebildet sein.

In einem dritten Schritt S3 wird die Wärme des wärmeleitenden Elements 205 an Zuluft, welche den Rohrinnenbereich 203 durchströmt, abgegeben. Somit wird die von dem Erdreich 102 aufgenommene Wärme an die Zuluft abgegeben, um diese zu erwärmen.

Alternativ kann die Zuluft auch gekühlt werden. In diesem Fall wird die Wärme von der Zuluft mittels der wärmeleitenden Elemente 205, wie in den Fig. 2 bis 8 dargestellt, an das Erdreich 102 abgegeben.

Obwohl die vorliegende Erfindung anhand von konkreten Ausführungsbeispielen beschrieben wurde, ist sie entsprechend der Ansprüche vielfältig modifizierbar.

### BEZUGSZEICHENLISTE

- 100: Anlage
- 101: Gebäude
- 102: Erdreich
- 103: Luftwärmepumpe
- 104: Zuluftleitung
- 105: Abluftleitung
- 106: Tiefe
- 107: Erdoberfläche
- 108: Länge
- 200: Rohr
- 201: Rohrmittelachse
- 202: Rohrwand
- 203: Rohrinnenbereich
- 204: Rohraußenbereich
- 205: wärmeleitendes Element
- 206: Platte
- 207: Schlitz
- 208: radiale Richtung
- 209: Dicke der Rohrwand
- 210: Eintauchtiefe
- 211: Mitte der Rohrwand
- 212: Gesamthöhe
- 213: Oberfläche
- 214: Gesamtoberfläche
- 300: stabförmige Form
- 301: Reihe
- 302: Loch
- 400: Länge
- 500: Verbindungselement
- 501: Schraube
- 600: Breite
- 700: Rohrschale
- 701: Schraube
- 800: Rohrteil
- 801: Zuluftdurchführung
- 802: Zacke
- 803: Rand

## Patentansprüche

1. Anlage (100), aufweisend ein Gebäude (101) und Erdreich (102), welches um das Gebäude (101) angeordnet ist, wobei die Anlage (100) ferner eine Luftwärmepumpe (103) mit einer Zuluftleitung (104) aufweist, wobei die Zuluftleitung (104) aufweist:
ein Rohr (200) mit einer Rohrmittelachse (201) und einer Rohrwand (202), welche einen Rohrinnenbereich (203) von einem Rohraußenbereich (204) trennt, und
mehrere wärmeleitende Elemente (205),
wobei die wärmeleitenden Elemente (205) die Rohrwand (202) durchstoßen, um Wärme zwischen dem Rohraußenbereich (204) und dem Rohrinnenbereich (203) zu leiten, und
wobei die Zuluftleitung (104) durch das Erdreich (102) verläuft,
wobei das Rohr (200) Kunststoff und/oder Beton aufweist oder daraus besteht und wobei die wärmeleitenden Elemente (205) ein oder mehrere Metalle aufweisen.

2. Anlage nach Anspruch 1, wobei die wärmeleitenden Elemente (205) die Rohrwand (202) in radialer Richtung (208) bezogen auf die Rohrmittelachse (201) durchstoßen.

3. Anlage nach Anspruch 1 oder 2, wobei eine Eintauchtiefe (210) zumindest eines wärmeleitenden Elements (205) in den Rohrinnenbereich (203), von einer Mitte (211) der Rohrwand (202) aus gemessen, zwischen 1/3 und 1/5, insbesondere 1/4, einer Gesamthöhe (212) des zumindest einen wärmeleitenden Elements (205) in radialer Richtung (208) bezogen auf die Rohrmittelachse (201) entspricht.

4. Anlage nach einem der Ansprüche 1 bis 3, wobei eine Oberfläche (213) zumindest eines wärmeleitenden Elements (205) in dem Rohrinnenbereich (203), von einer Mitte (211) der Rohrwand (202) aus gemessen, zwischen 1/3 und 1/5, insbesondere 1/4, einer Gesamtoberfläche (214) des zumindest einen wärmeleitenden Elements (205) entspricht.

5. Anlage nach einem der Ansprüche 1 bis 4, wobei zumindest ein wärmeleitendes Element (205) durch einen Schlitz (207) in der Rohrwand (202) hindurchragt, welcher parallel zu der Rohrmittelachse (201) verläuft.

6. Anlage nach einem der Ansprüche 1 bis 5, wobei zumindest ein wärmeleitendes Element (205) eine stabförmige Form (300) aufweist und in radialer Richtung (208) bezogen auf die Rohrmittelachse (201) angeordnet ist.

7. Anlage nach einem der Ansprüche 1 bis 6, wobei sich bei zumindest einem wärmeleitenden Element (205) eine Länge (400) desselben entlang der Rohrmittelachse (201) in radialer Richtung (208) verringert.

8. Anlage nach einem der Ansprüche 1 bis 7, wobei zumindest ein wärmeleitendes Element (205) eine Platte (206) aufweist.

9. Anlage nach einem der Ansprüche 1 bis 8, wobei zumindest ein wärmeleitendes Element (205) zumindest ein Verbindungselement (500) und mehrere Schrauben (501) und/oder Niete aufweist und das Verbindungselement (500) mittels der Schrauben (501) und/oder Niete derart mit der Rohrwand (202) verbunden ist, dass die Schrauben (501) und/oder Niete durch die Rohrwand (202) hindurch in den Rohrinnenbereich (203) ragen.

10. Anlage nach einem der Ansprüche 1 bis 9, wobei das Rohr (200) aus zumindest zwei Rohrschalen (700) gebildet ist und zumindest ein wärmeleitendes Element (205) zwischen den zumindest zwei Rohrschalen (700) befestigt ist.

11. Anlage nach einem der Ansprüche 1 bis 10, wobei mehrere wärmeleitende Elemente (205) symmetrisch in Bezug auf die Rohrmittelachse (201) angeordnet sind.

12. Anlage nach einem der Ansprüche 1 bis 11, wobei das Rohr (200) zumindest zwei Rohrteile (800) aufweist und zumindest ein wärmeleitendes Element (205) eine Zuluftdurchführung (801) aufweist, welche zwischen den zumindest zwei Rohrteilen (800) angeordnet ist, wobei einzelne Zacken (802) des wärmeleitenden Elements (205) von einem Rand (803) der Zuluftdurchführung (801) hervorstehen.

13. Verfahren zum Betreiben einer Zuluftleitung (104) für eine Anlage (100), die ein Gebäude (101) und Erdreich (102) aufweist, welches um das Gebäude (101) angeordnet ist, wobei die Zuluftleitung (104) durch das Erdreich (102) verläuft, mit den Schritten:
A) Erwärmen eines wärmeleitenden Elements (205) in einem Rohraußenbereich (204),
B) Leiten einer aufgenommenen Wärme mittels des wärmeleitenden Elements (205), welches eine Rohrwand (202) eines Rohrs (200) der Zuluftleitung (104) durchstößt, von dem Rohraußenbereich (204) in einen Rohrinnenbereich (203), und
C) Abgeben der Wärme des wärmeleitenden Elements (205) an Zuluft, welche den Rohrinnenbereich (203) durchströmt,
wobei das Rohr (200) Kunststoff und/oder Beton aufweist oder daraus besteht und wobei die wärmeleitenden Elemente (205) ein oder mehrere Metalle aufweisen.

## Claims

1. An installation (100) comprising a building (101) and soil (102) arranged around the building (101), the installation (100) further comprising an air heat pump (103) with an air supply pipeline (104), the air supply pipeline (104) comprising:
a pipe (200) having a pipe central axis (201) and a pipe wall (202) separating an inner pipe region (203) from an outer pipe region (204), and
several heat-conducting elements (205),
wherein the heat-conducting elements (205) penetrate through the pipe wall (202) to conduct heat between the pipe outer region (204) and the pipe inner region (203), and
wherein the air supply pipeline (104) extends through the soil (102),
wherein the pipe (200) comprises or consists of plastic and/or concrete and wherein the heat-conducting elements (205) comprise one or more metals.

2. The installation according to claim 1, wherein the heat-conducting elements (205) penetrate through the pipe wall (202) in a radial direction (208) relative to the pipe central axis (201).

3. The installation according to claim 1 or 2, wherein an immersion depth (210) of at least one heat-conducting element (205) into the pipe inner region (203) measured from a centre (211) of the pipe wall (202) corresponds to between 1/3 and 1/5, in particular 1/4, of a total height (212) of the at least one heat-conducting element (205) in the radial direction (208) relative to the pipe central axis (201).

4. The installation according to one of claims 1 to 3, wherein a surface (213) of at least one heat-conducting element (205) in the pipe inner region (203) measured from a centre (211) of the pipe wall (202) corresponds to between 1/3 and 1/5, in particular 1/4, of a total surface (214) of the at least one heat-conducting element (205).

5. The installation according to any one of claims 1 to 4, wherein at least one heat-conducting element (205) protrudes through a slot (207) in the pipe wall (202) which extends parallel to the pipe central axis (201).

6. The installation according to any one of claims 1 to 5, wherein at least one heat-conducting element (205) has a rod-shaped shape (300) and is arranged in a radial direction (208) with respect to the pipe central axis (201).

7. The installation according to any one of claims 1 to 6, wherein a length (400) of at least one heat-conducting element (205) decreases in the radial direction (208) along the pipe central axis (201).

8. The installation according to any one of claims 1 to 7, wherein at least one heat-conducting element (205) comprises a plate (206).

9. The installation according to any one of claims 1 to 8, wherein at least one heat-conducting element (205) comprises at least one connecting element (500) and a plurality of screws (501) and/or rivets, and the connecting element (500) is connected to the pipe wall (202) by means of the screws (501) and/or rivets in such a way that the screws (501) and/or rivets protrude through the pipe wall (202) into the pipe inner region (203).

10. The installation according to one of claims 1 to 9, wherein the pipe (200) is formed from at least two pipe shells (700) and at least one heat-conducting element (205) is fixed between the at least two pipe shells (700).

11. The installation according to any one of claims 1 to 10, wherein a plurality of heat-conductive elements (205) are arranged symmetrically with respect to the pipe central axis (201).

12. The installation according to one of claims 1 to 11, wherein the pipe (200) comprises at least two pipe parts (800) and at least one heat-conducting element (205) comprises an air supply passage (801) arranged between the at least two pipe parts (800), wherein individual dents (802) of the heat-conducting element (205) project from an edge (803) of the air supply passage (801).

13. A method for operating an air supply pipeline (104) for an installation (100) comprising a building (101) and soil (102) arranged around the building (101), wherein the air supply pipeline (104) extends through the soil (102), the method comprising the steps of:
A) heating a heat-conducting element (205) in an outer pipe section (204),
B) conducting an absorbed heat with the heat-conducting element (205), which penetrates through a pipe wall (202) of a pipe (200) of the supply air pipeline (104) from the pipe outer region (204) into a pipe inner region (203), and
C) dissipating the heat from the heat-conducting element (205) to supply air which flows through the pipe inner region (203),
wherein the pipe (200) comprises or consists of plastic and/or concrete and wherein the heat-conducting elements (205) comprise one or more metals.

## Revendications

1. Installation (100) comprenant un bâtiment (101) et de la terre (102) disposée autour du bâtiment (101), l'installation (100) comprenant en outre une pompe à chaleur à air (103) avec un conduit d'alimentation en air (104), le conduit d'alimentation en air (104) comprenant
un tuyau (200) ayant un axe central de tuyau (201) et une paroi de tuyau (202) séparant une région intérieure du tuyau (203) d'une région extérieure du tuyau (204), et
plusieurs éléments conducteurs de chaleur (205),
dans lequel les éléments conducteurs de chaleur (205) pénètrent dans la paroi du tuyau (202) pour conduire la chaleur entre la région extérieure du tuyau (204) et la région intérieure du tuyau (203), et
dans lequel le conduit d'alimentation en air (104) s'étend à travers la terre (102),
dans lequel le tuyau (200) comprend ou est constitué de plastique et/ou de béton et dans lequel les éléments conducteurs de chaleur (205) comprennent un ou plusieurs métaux.

2. Installation selon la revendication 1, dans laquelle les éléments conducteurs de chaleur (205) pénètrent dans la paroi du tuyau (202) dans une direction radiale (208) par rapport à l'axe central du tuyau (201).

3. Installation selon la revendication 1 ou 2, dans laquelle une profondeur d'immersion (210) d'au moins un élément conducteur de chaleur (205) dans la région intérieure du tuyau (203), mesurée à partir d'un centre (211) de la paroi du tuyau (202), correspond à entre 1/3 et 1/5, en particulier 1/4, d'une hauteur totale (212) de l'au moins un élément conducteur de chaleur (205) dans la direction radiale (208) par rapport à l'axe central du tuyau (201).

4. Installation selon l'une des revendications 1 à 3, dans laquelle une surface (213) d'au moins un élément conducteur de chaleur (205) dans la région intérieure du tuyau (203), mesurée à partir d'un centre (211) de la paroi du tuyau (202), correspond à entre 1/3 et 1/5, en particulier 1/4, d'une surface totale (214) de l'au moins un élément conducteur de chaleur (205).

5. Installation selon l'une quelconque des revendications 1 à 4, dans laquelle au moins un élément conducteur de chaleur (205) fait saillie à travers une fente (207) dans la paroi du tuyau (202) qui s'étend parallèlement à l'axe central du tuyau (201).

6. Installation selon l'une quelconque des revendications 1 à 5, dans laquelle au moins un élément conducteur de chaleur (205) a une forme de tige (300) et est disposé dans une direction radiale (208) par rapport à l'axe central du tuyau (201).

7. Installation selon l'une quelconque des revendications 1 à 6, dans laquelle au moins un élément conducteur de chaleur (205) a une longueur (400) le long de l'axe central du tuyau (201) qui diminue dans la direction radiale (208).

8. Installation selon l'une quelconque des revendications 1 à 7, dans laquelle au moins un élément conducteur de chaleur (205) comporte une plaque (206).

9. Installation selon l'une des revendications 1 à 8, dans laquelle au moins un élément conducteur de chaleur (205) présente au moins un élément de liaison (500) et une pluralité de vis (501) et/ou de rivets, et l'élément de liaison (500) est relié à la paroi du tuyau (202) au moyen des vis (501) et/ou des rivets de telle sorte que les vis (501) et/ou les rivets pénètrent à travers la paroi du tuyau (202) dans la région intérieure du tuyau (203).

10. Installation selon l'une des revendications 1 à 9, dans laquelle le tuyau (200) est formé d'au moins deux coquilles de tuyau (700) et au moins un élément conducteur de chaleur (205) est fixé entre les au moins deux coquilles de tuyau (700).

11. Installation selon l'une quelconque des revendications 1 à 10, dans laquelle une pluralité d'éléments conducteurs de chaleur (205) sont disposés symétriquement par rapport à l'axe central du tuyau (201).

12. Installation selon l'une des revendications 1 à 11, dans laquelle le tuyau (200) comprend au moins deux parties de tuyau (800) et au moins un élément conducteur de chaleur (205) comprend un passage d'alimentation en air (801) disposé entre les au moins deux parties de tuyau (800), dans lequel des dents individuelles (802) de l'élément conducteur de chaleur (205) font saillie d'un bord (803) du passage d'alimentation en air (801).

13. Procédé pour utiliser un conduit d'alimentation en air (104) pour une installation (100) comprenant un bâtiment (101) et de la terre (102) disposé autour du bâtiment (101), dans lequel le conduit d'alimentation en air (104) s'étend à travers la terre (102), le procédé comprenant les étapes suivantes :
A) chauffer un élément conducteur de chaleur (205) dans une région extérieure du tuyau (204),
B) conduire une chaleur absorbée au moyen de l'élément conducteur de chaleur (205) qui pénètre une paroi de tuyau (202) d'un tuyau (200) du conduit d'alimentation en air (104) de la région de tuyau extérieure (204) à une région de tuyau intérieure (203), et
C) céder la chaleur de l'élément conducteur de chaleur (205) à l'air d'alimentation qui circule dans la région intérieure du tuyau (203),
dans lequel le tuyau (200) comprend ou est constitué de plastique et/ou de béton et dans lequel les éléments conducteurs de chaleur (205) comprennent un ou plusieurs métaux.
